## Europäisches Patentamt

(19) **European Patent Office**

**Office européen des brevets**

(11) Publication number: **0 266 951**
**B1**

## (12) EUROPEAN PATENT SPECIFICATION

(45) Date of publication of patent specification: **16.01.91**

(51) Int. Cl.⁵: **B 29 C 63/46, B 29 C 55/22**

(21) Application number: **87309474.2**

(22) Date of filing: **27.10.87**

(54) In-situ method for lining pipe with polymeric liner.

(30) Priority: **04.11.86 GB 8626354**

(43) Date of publication of application:
**11.05.88 Bulletin 88/19**

(45) Publication of the grant of the patent:
**16.01.91 Bulletin 91/03**

(84) Designated Contracting States:
**AT DE FR GB IT NL SE**

(56) References cited:
**CA-A- 57 424**
**GB-A-2 084 686**
**US-A-3 462 825**
**US-A-3 825 393**
**US-A-3 856 905**
**US-A-3 928 997**

(73) Proprietor: **Du Pont Canada Inc.**
**Box 2200, Streetsville Postal Station**
**Mississauga, Ontario L5M 2H3 (CA)**

(73) Proprietor: **UNITED CORROSION**
**CONSULTANTS LTD.**
**7605-18 Street Box 5560, Station L,**
**Edmonton Alberta T6P 1N9 (CA)**

(72) Inventor: **Whyman, Andrew David**
**181 Chebucto drive**
**oakville Ontario L6J 5R1 (CA)**
Inventor: **Kneller, Dale Alfred**
**732 Hendra Crescent**
**Edmonton Alberta T6R LE6 (CA)**

(74) Representative: **Ellis, John Clifford Holgate et al**
**MEWBURN ELLIS & CO. 2/3 Cursitor Street**
**London EC4A 1BQ (GB)**

Courier Press, Leamington Spa, England.

## Description

This invention relates to a method of installing a pipe liner of synthetic polymer in a pipe section according to the first part of claim 1. Such a method is known from US—A—3462825. The invention further relates to an apparatus for lining a pipeline section with a tubular liner of synthetic polymer.

Metal pipes and pipes lined with ceramic and concrete materials are not satisfactory for handling many fluids which have corrosive or abrasive characteristics or both. Such pipes, even though coated internally with corrosion- or abrasion-resistant material, typically deteriorate in service with the passage of time, with a resultant increased risk of failure. If such failures should occur, the contents of the pipeline will escape, if the line is under pressure, and there is risk of damage to the environment and to other structures if corrosive, toxic or inflammable materials are being conveyed in the pipeline; at the very least the pipeline owner faces the loss of a certain amount of product as a result of such failures. A number of proposals have been made with the intent of overcoming this deficiency by inserting synthetic liner material into new pipelines prior to installation, or with greater difficulty, into existing underground pipeline systems.

United States Patent 3 856 905 of D.H. Dawson, issued 1974 December 24, discloses a process for lining a conduit with a plastic liner tube by radially compressing the tube at a temperature of about 100°C to a diameter smaller than its original diameter without increasing the length of the tube, reducing the temperature of the tube to about room temperature, positioning the tube within the conduit, and heating the tube to a temperature of about 100°C to cause radial expansion of the tube within the conduit. Longitudinal elongation of the liner was avoided by supporting the liner in a rigid frame, or, where the liner was passed through a swaging die, by operating sets of feed rollers and take up rollers at the same longitudinal speed.

In United States Patent 3 959 424 of D. H. Dawson et al, issued 1976 May 25, a method of lining pipe with a thermoplastic liner was disclosed which included reducing the diameter of the liner without a substantial increase in the length of the liner, inserting the liner in the conduit and allowing the liner to expand by recovery within the plastic memory of the thermoplastic liner.

Canadian Patent 575 424 of J. F. Lontz et al discloses lining metal pipes with fluorocarbon polymer liners by sintering a polymeric liner of larger diameter than the pipe, cooling the liner, stretching the liner to reduce its diameter to slightly less than that of the pipe, placing the liner inside the pipe, and releasing the stretching force on the liner, optionally raising its temperature at the same time.

United States Patent 3 462 825 of G. R. Pope et al, issued 1969 August 26, discloses a process for lining a tubular member with a liner of fluorinated polymer by drawing the liner through a reduction die into the tubular member without application of heat, and releasing the liner, whereupon it expands into tight engagement with the inner wall of the member. The Patent states that the variables of wall thickness and the rate of pulling through the die have no influence on the process.

In the process disclosed in United Kingdom Patent 2 084 686B of S. Muir, published 1984 May 16, a roll stand of a type known in the art is used to roll-reduce polyolefin pipe having an outside diameter greater than the inside diameter of a pipe to be lined, to an outside diameter less than said inside diameter. After the diameter of the polyolefin pipe has been roll-reduced, and the length thereof increased, the polyolefin pipe liner is inserted into the pipe to be lined. The liner apparently remains in the reduced-diameter state without application of external force; there is no mention of tension being applied to the liner. The liner is then heated to a temperature between 100°C and 120°C so as to produce a reversion expansion to some 90 percent or more of the original outside diameter of the polyolefin pipe, thus fully engaging the inside wall of the pipe being lined. The disclosure indicates that the polyolefin pipes may be roll-reduced some 20 percent in outside diameter.

In published European Patent Application No. 0 226 410 of J. R. Thompson, published 1987 June 24, a process is disclosed in which the pulling end of the liner is fitted with a pulling head and the distal end is restrained to produce a longitudinal force tending to strain the liner. The diameter consequently reduces in an amount in accordance with Poisson's ratio; in the case of polyethylene, which exhibits a Poisson's ratio of about 0.45, a strain of 10 cm produces a diameter reduction of about 4.5 cm. The longitudinal force is maintained on the liner throughout the insertion step, and released to expand the liner after the liner is positioned inside the pipe section.

Most of the known methods of altering the diameter of a thermoplastic liner in order to insert it into a pipe section operate within the plastic range of strain in order to use the plastic memory of the liner, thus requiring either high pressure or the application of heat or a combination thereof to expand the inserted liner within a reasonable amount of time. In the method disclosed by Pope et al., the liner is pulled through a reduction die, causing a considerable frictional force against the motion of the liner through the die. If an attempt were made to insert long lengths of liner at a reasonable rapid rate into the pipe, the necessary force would be well above the tensile yield point of the liner material and the liner would deform irreversibly.

It has now been found that these and other difficulties known in the art may be overcome by using powered rollers to deform radially a liner of synthetic thermoplastic or thermosetting material within the elastic-plastic range of the liner, as defined below, inserting the liner into a pipe section to be lined while maintaining the liner in the deformed state by the application of longitudinal or radial stress and thereafter releasing the liner from the stress to allow the liner to expand radially into tight contact with the inside wall of the pipe section being lined.

Accordingly, the present invention provides a method of installing a pipe liner of synthetic polymer in a pipe section, comprising:

(a) providing a pipe liner of synthetic polymer having an outer diameter larger than the inside diameter of the pipe section,

(b) passing the liner through a diameter-reducing means adjusted so that the resultant outside diameter of the liner while in a reduced diameter state is sufficiently smaller than the inside diameter of the pipe section that the liner readily passes through the pipe section,

(c) positioning the pipe liner in the pipe section while maintaining the liner in the reduced-diameter state by the application of a stress, and

(d) releasing said stress in the liner.

Said diameter reducing being less than the upper limit of the elastic-plastic range, the method of the invention being characterized in that:

(i) the said pipe liner has a normal outer diameter from about 0.5 percent to 6 percent larger than the inside diameter of the pipe section,

(ii) the diameter reducing means is at least one set of at least two rollers,

(iii) the liner is maintained in the reduced-diameter state by longitudinal or radial stress, and

(iv) at least one set of said rollers is driven at a rate sufficient to maintain tensile stress in said liner during the insertion step at a value below the tensile yield limit of said synthetic polymer.

The liner may be drawn into the pipe section in order to position the pipe liner in the pipe section, while maintaining tensile stress on the liner, at least one set of said rollers being driven at a rate sufficient to maintain said tensile stress in said liner during the insertion step at a value at least sufficient to maintain the liner in the reduced-diameter state and below the tensile yield limit of said synthetic polymer.

The present invention also provides an apparatus for lining a pipeline section with a tubular liner of synthetic polymer, comprising:

(a) means for drawing said liner into said pipeline at a variable controlled rate,

(b) at least one set of at least two rollers adapted for reducing the diameter of said liner by an amount from about 5 to 20 percent, said rollers being adapted to be mounted in registration with an end of said pipeline section,

(c) means for controlling peripheral speed of said rollers such that the tensile stress on the liner is maintained at a value not exceeding the tensile yield limit of said synthetic polymer.

The synthetic polymer of the pipe liner may be a thermoplastic or thermosetting polymer, provided that the polymer is sufficiently rigid at the ambient temperatures encountered in relining operations that it may be radially deformed to decrease its diameter, and hence increase its wall thickness and/or its length, without collapsing into a "dogbone" cross-section. Thermoplastic polymers suitable for use in the process of the invention include polyolefins, for example polyethylene, polypropylene or polybutylene, or a polyamide, for example nylon 6,6, rigid polyvinyl chloride or acrylonitrilebutadiene-styrene polymer. Where the polymer is polyethylene, a preferred polymer is a homopolymer of ethylene or a copolymer of ethylene and at least one hydrocarbon alpha-olefin of 4 to 10 carbon atoms. High-density polyethylene is an especially preferred thermoplastic.

Optionally, the synthetic polymer of the liner may be a mixture of polyolefin in a continuous phase, thermoplastic polymer incompatible therewith in a discontinuous phase, and a compatibilizer for the polyolefin and incompatible thermoplastic polymer. Where the polymer present in a discontinuous phase is a so-called barrier resin, the pipe liner resulting therefrom exhibits improved barrier resistance to permeation.

Also suitable is a pipe liner comprising two different resin layers in a co-extruded composite, for example, a liner having an outer layer of polyethylene and an inner layer of a so-called barrier resin, the liner thereby showing increased resistance to permeation as discussed hereinabove.

Thermosetting polymers in composite tubing suitable in the form of composite tubing for use in the process of the invention include rigid epoxy and polyester thermoset resins known in the art as being useful for pipe.

The means used to reduce the diameter of the liner comprises at least one set of rollers having appropriately sized concave outer circumferential surfaces, the surfaces being in registration with each other and with the opening of the pipe section to be lined. Optionally, a lubricant suitable for wire-pulling may be used at the diameter-reducing rollers to improve the friction characteristics of the liner material as it passes thorough the rollers and the pipe section. Lubricant may be particularly useful when the rollers are used in pairs rather than sets of four, because there is a large difference in circumferential speed of the rollers between the central surface of smallest diameter and the edges which are of larger diameter. This speed differential may be minimised by increasing the diameter of the rollers or by arranging the rollers in sets of four. Lubricants well known in the art may be used, for example Yellow 77, petroleum jelly, engine oil or transmission fluid. The rollers must not be so heavily lubricated that insufficient friction is available between rollers and liner to drive the liner; the adjustment of lubricant type and amount may be readily made by the person skilled in the art.

Prior to being reduced in diameter by the roller means disclosed herein, the pipe liner has an initial outside diameter from about 0.5 percent to 6 percent larger than the inside diameter of the pipe section, in order to assure an interference fit with the pipe section after installation. Preferably where the liner is polyethylene, it has an initial outside diameter from about 1 to 3 percent larger than the inside diameter of the pipe section.

A plurality of sets of diameter-reducing rollers may be used. The use of up to at least three sets of rollers to reduce the diameter of the liner in stages is particularly preferred for relining large-diameter pipe, for example pipe of at least 20 cm (8 in.) diameter, in which the liner is deformed by a large absolute amount, and in which therefore the amount of work or energy necessary to deform a given length of liner is consequently also large. If a plurality of roller sets is used, it is advantageous though not essential that they be adjusted so that the liner diameter is reduced equally in each roller set.

Pipe sections to be lined by the method of the invention may be of diameters commonly used in industrial and field operations, for example from about 12 to at least about 900 mm (0.5 to 36 inches); preferred diameters are from about 50 mm to about 600 mm (2 to 24 inches) in nominal diameter.

The wall thickness of the liner is sufficiently large that the liner will not collapse when it is passed through the rollers, and sufficiently small that the energy required to reduce its diameter does not too greatly reduce the rate at which the liner may be fed through the rollers. A preferred wall thickness range is from about one-thirtieth to about one-twelfth of the liner outside diameter; that is, a liner having a Standard Diameter Ratio (S.D.R.) of about 12 to 30.

It is critical that the amount of strain undergone by the pipe liner in radial compression be below the upper limit of the elastic range and that the amount of strain in longitudinal tension be below the tensile yield point for the particular synthetic polymer selected for use as the liner. If a thermoplastic is selected, then the term "elastic" includes both the fully elastic range and the elastic-plastic range, which will be defined below. As is well-known in the art, no thermoplastic material exhibits complete recovery of a deformation regardless of how small; the phenomenon is called plastic creep, and is influenced by, among other things, the amount of elongation, the time the material is held in the elongated state, and the temperature of the thermoplastic specimen. Nevertheless, thermoplastic materials exhibit substantially complete recovery of deformation if the deformation is small and the time during which the material is deformed is short, especially at temperatures well below their softening points. In the case of high-density polyethylene materials, the substantially fully elastic range of strain at room temperature over a short time is from zero to about 7 percent; above 7 percent strain and below the fully plastic range, the materials exhibit a combination of elastic and plastic properties such that the total recovery upon removal of the stress is greater than 7 percent but less than the original amount of strain applied to the plastic material. This range, herein defined as the elastic-plastic range, for polyethylene has an upper limit of about 18 to 20 percent, depending upon the grade of polyethylene, the temperature, time and other factors. As the strain increases above the elastic-plastic range, in the fully plastic range, a test sample will increasingly exhibit permanent deformation. Thus the total reduction in diameter at the rolls should be no more than about 20 percent where a polyethylene liner is used, depending upon the considerations mentioned above. If other thermoplastic polymers are used in the liner, the elastic-plastic properties of such thermoplastic polymers will govern the amount of permitted reduction in diameter.

If the liner consists of a thermosetting polymer, the amount of reduction and expansion selected are commensurate with the elastic characteristics of the particular polymer used, thermosetting materials exhibiting substantially no plastic creep.

In the embodiment of the invention using tension to maintain the reduced diameter of the pipe liner, sufficient stress is maintained on the pipe liner throughout the insertion step to maintain the liner in the reduced-diameter state. Preferably, the longitudinal stress in the liner is maintained at least at about 2.1 MPa (300 psi) and below the tensile yield point of the polymer as described above.

In an alternative embodiment of the invention, the liner may be maintained in the reduced-diameter state by providing external fluid pressure around the liner during insertion. In such an embodiment of the method, the diameter-reducing rollers are placed immediately adjacent the insertion end of the pipe section. The insertion end of the liner is sealed prior to inserting it in the pipe section and the pipe section is fitted with a fluid-tight seal at the insertion end of the pipe section which will allow the liner to pass through into the pipe section while preventing loss of pressurizing fluid from the pipe section. The pipe section is pressurized internally with fluid, the liner is inserted into the pipe section simultaneously and the fluid is simultaneously allowed to escape as the liner is inserted, at a rate comparable to the rate at which the liner is inserted through the seal. A small pulling force may be applied to the liner to prevent it from buckling as it is inserted. The fluid pressure provides a radial compressive stress which maintains the liner in a reduced-diameter state. After the liner is fully inserted, the fluid pressure is released to allow the liner to expand and come into contact with the inner surface of the pipe section.

The use of the close radial tolerances of the invention and maintaining the radial deformation of the liner within the elastic-plastic range ensure that when the stress on the pipe liner is released, the liner will expand to conform tightly to the inner wall of the pipe section. Thus it is unnecessary to expand the liner by pressurizing, heating or a combination of pressurizing and heating the liner in order to obtain an interference fit of the liner in the pipe section. The clearance between the liner of reduced diameter and the pipe section, expressed as the ratio of the outside diameter of the liner after passing through the rollers to the inside diameter of the pipe section, may be from about 84 percent to 96 percent. In small pipe sections, the necessary clearance is greater than in larger pipes, such that the preferred reduced diameter of a liner for a nominal 2-inch pipe (actual o.d. 60.3 mm) is 84 to 90 percent of the inside diameter of the pipe section; in nominal 3-inch (actual o.d. 88.9 mm) and larger pipe sections, the preferred reduced diameter of the liner is about 90 to 96 percent of the inside diameter of the pipe section. For in-shop installation of pipe liners according to the method of the invention, closer tolerances may be used.

In order to prevent permanent deformation of the pipe liner in the reduced-diameter state, the insertion step is of a limited duration, preferably no more than about 2 hours. This time depends upon the temperature of the liner during the insertion step, the molecular weight of the polymer and the amount of stress on the liner, among other things.

The lining operation may be carried out at temperatures from about −40°C to +45°C, preferably from about −10°C to +30°C.

The rate of inserting the liner into the pipe section is preferably at least 8 m/min and may be up to at least about 30 m/min, depending upon the ambient conditions and the configuration of the liner.

The length of a section of liner that may be installed in a single pull by the method of the invention is up to at least 500 to 800 m and may be over 1 km under favourable circumstances, for example in a reasonably clean pipeline having few tight-radius bends.

Embodiments of the present invention will be described in greater detail with the aid of the accompanying drawings in which:

Figure 1 is a sectional view of apparatus for carrying out an embodiment of the process of the present invention showing a liner of thermoplastic material being roll-reduced and drawn into a pipe section;

Figure 2 is a cross-sectional view of rollers adapted for reducing the diameter of a pipe liner according to an embodiment of the present invention;

Figure 3 is a sectional view of an apparatus adapted for carrying out an embodiment of the process of the invention using fluid pressure to maintain the liner in a reduced-diameter state; and

Figure 4 is a cross-sectional view of a set of four rollers adapted for reducing the diameter of a liner according to an embodiment of the invention.

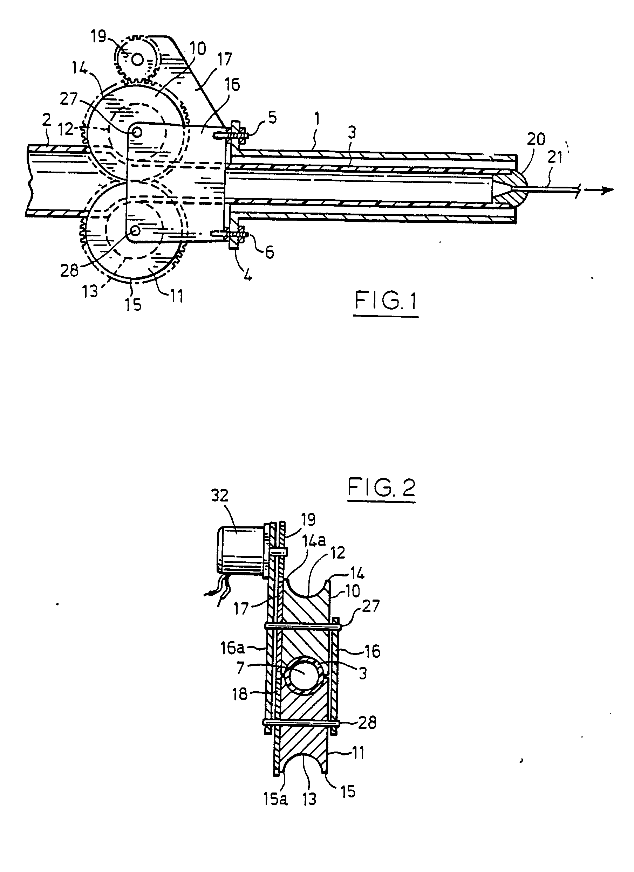

Referring to Figure 1, a pipeline section 1 is shown being lined with a pipe liner of synthetic polymer shown in its original diameter 2. Diameter-reducing rollers 10 and 11 driven by drive means (shown in Figure 2) and fabricated from non-resilient material, for example stainless steel, are mounted on mounting frame 16 removably fastened by any convenient means, for example bolts 5, 6 to flange 4 which is in turn fixed, preferably by welding, to pipeline section 1. The rolling surface of rollers 10 and 11, shown in detail in Figure 2, is concave substantially semicircular in cross-section, having depressed centre portions 12 and 13 and protruding rims 14, 14a and 15, 15a. When brought into registration with each other and with the opening of pipe section 1, the rolling surfaces of the rollers define a substantially circular area through which the pipe liner 3 is passed, and the rims 14 and 14a are in close proximity to the rims 15 and 15a respectively, for example within 1 mm of each other. The rims are generally not in tight contact in order to avoid undue wear on the roller mounting means, for example axles 27, 28 and their respective bearings (not shown). The diameter of the circular area is selected such that the diameter of pipe liner 3 will be between 85 percent and 95 percent of the inside diameter of the pipe section 1, in order to allow at least a minimum clearance during the drawing step. As discussed above the liner 3 maintains its reduced diameter while it is under tension. Generally, the pipe section 1 and the liner 3 are of circular cross-section, although if the pipe section 1 is non-circular, for example elliptical, the liner 2 may be of corresponding cross-section. The diameter-reducing rollers generally are not intended to alter the shape of the liner's original cross-section; the liner is not folded over, for example into a dog-bone shape. In certain circumstances, however, the diameter-reducing rollers may be used to alter a circular liner to a noncircular cross-section, for example in order to line a pipe of elliptical cross-section.

Figure 2 illustrates in detail the configuration of the rollers and a portion of an exemplary drive mechanism therefor. The rollers 10, 11 are mounted on axles 27, 28 positioned in frames 16, 16a so that the rims 14, 14a of roller 10 are in close proximity to the rims 15, 15a of roller 11. Synchronizing gears 17, 18 are mounted coaxially with rollers 10, 11 and mesh with each other so that rollers 10, 11 counter-rotate at equal peripheral speed. Synchronizing gear 17 is driven by gear 19 which is in turn driven by variable-speed drive 32. It is essential that either the roller drive mechanism or the wireline unit be capable of variable speed operation, in order that the tension of the liner during the insertion step be maintained at an appropriate value below the tensile yield limit of the synthetic polymer forming the liner. Generally, the speeds of both the rollers and the wireline unit described below are variable. Drive 32 may be electrically variable or hydraulic, and is preferably hydraulically operated. Hydraulic motors are advantageous in that they can be operated at a given torque relatively easily.

In preparation for lining a pipe section, a pig (not shown) is propelled by well-known methods, for example by applying fluid pressure, through the pipe section so that communication with the pulling end of the pipe section may be accomplished by means of a pulling device, for example wireline 21. A small portion of pipe liner 2, shown in Figure 1, is passed through rollers 10 and 11, to reduce the diameter of that portion of liner. The liner is attached to wireline 21 by wireline attachment device 20, which may be of a type generally known in the art; preferably, the wireline attachment device is of a diameter equivalent to the reduced diameter of the liner after passing through the diameter-reduction rollers. A wireline unit of a type known in the art (not shown) is attached to wireline 21 and is adapted to measure the tension on wireline 21 in order to monitor the tensile stress on liner 3. Frame 16 comprising rollers 10, 11 is mounted on flange 4. All of the pipe liner 3 subsequently drawn into pipe section 1 is passed through rollers 10 and 11 which reduce its diameter sufficiently to allow the pipe liner 3 to be conveniently drawn through pipe section 1. The work necessary to reduce the diameter of the pipe liner from large diameter 2 to small diameter 3 would cause a considerable tension upon the pipe liner between the rollers 10 and 11 and the wireline attachment device 20 if the rollers were not driven at an appropriate speed; consequently, the rate of rotation of rollers 10, 11 is adjusted in combination with the rate of pull and the tension on wireline 21 so that the longitudinal tensile stress in the liner is not allowed to rise above the yield point of the polymer of the liner, and to provide a safety factor, preferably not above two-thirds of the yield point. Should this level of stress be exceeded, the liner may fail during insertion and be difficult to retrieve.

While under tensile or radial stress tending to maintain the reduced diameter of pipe liner 3, liner 3 does not revert to its former diameter as at reference number 2 in Figure 1, but remains of such a diameter as to be conveniently drawn through pipeline section 1. In accordance with Poisson's ratio which is about 0.45 for high-density polyethylene, for each 1.0 percent reduction in the diameter of the polymeric pipe liner by reducing rolls 10 and 11, the length of the section of pipe liner increases by about 0.45 percent. In contrast, reducing the diameter of the liner by merely elongating the liner would require an elongation of 1.0 percent for each 0.45 percent reduction in the diameter; thus the method of the invention requires only about one-quarter of the elongation that would be required if stretching were the only means used to reduce the diameter of the liner.

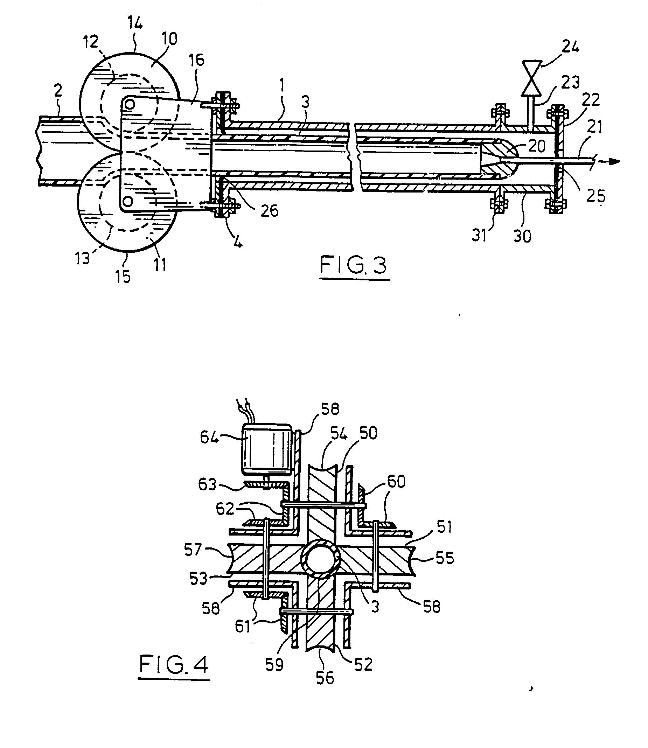

Referring to Figure 3, an embodiment of the process is shown in which external fluid pressure is maintained on the liner during the insertion step. Wireline attachment device 20 is attached to the insertion end of the liner 3 in such a manner as to be pressure-tight, for example by fusion welding where the liner is thermoplastic. The liner is inserted through fluid-tight seal 26 of conventional design fixed at the insertion end of the pipe section 1, after passing through the diameter-reducing rolls 14, 15 as described hereinbefore. Sufficient pulling force to prevent liner 3 from changing shape and impeding its free movement through pipe section 1 is applied by wireline 21 through wireline attachment device 20. At the distal end of pipe section 1 is fixed a fluid-tight cap 30 on flange 31. Cap 30 includes a draw-off line 23 controlled by a valve 24. As pipe liner 3 is inserted into the pipe section 1, the rate of fluid emitted from pipe section 1 is controlled by adjusting valve 24 to maintain the appropriate pressure external to pipe liner 3 such that pipe liner 3 will remain in the reduced-diameter state. Wireline 21 passes out the end of pipe section 1 to an appropriate pulling device and in order to maintain fluid pressure inside pipe section 1, end seal 25 retained by split cap 30 closely fits around wireline 21. When pipe liner 3 is fully inserted, for example into contact with end plate 22 of cap 30, cap 30 and seal 25 on pipe liner 3 are removed to eliminate the fluid pressure and pipe liner 3 is allowed to expand into contact with the inner walls of pipe section 1.

If the liner is inserted while maintaining radial stress to retain the reduced diameter, then the source of radial stress is removed when the liner has been positioned inside the pipe section. Thereupon the liner undergoes a reversion process in the same way as it does when tension is removed, to about the same degree of diameter increase and longitudinal shrinkage.

Sufficient pipe liner 3 is allowed to protrude from the pipeline section 1 that, as the liner retracts longitudinally in the stress-releasing step, the end of the liner will not recede inside the pipeline section. If free to expand fully, pipe liner 3 would revert almost completely to its previous diameter, but because its size is closely controlled with respect to the internal size of pipeline section 1, pipe liner 3 assumes an interference fit with pipeline section 1. The reversion will be substantially complete after an interval of about 0.1 to 24 hours.

After reversion is substantially complete, joints are prepared at both ends of the liner by conventional methods, for example by attaching stub ends, or by rolling a flange using a mandrel or by using O-rings or other known jointing methods. In a preferred method, a stub end is attached to the liner as follows: the liner is marked at a point opposite the pipeline flange to indicate the point of neutral stress in the liner; a small portion of the liner sufficient to provide working room for a butt fusion device, generally about 30 to 60 cm, is first drawn out of the pipeline; the liner is cut at a point such that a flange to be attached on the stub end will be at the location of the mark; the flange is butt welded onto the cleaned cut end of the liner; the liner is caused to retract into the pipeline until the liner flange is flush with the flange on the pipeline. Generally, force must be used to cause the liner to retract fully into the pipe section. In many cases manual force is sufficient to urge the liner into place; if mechanical advantage is necessary, conventional methods may be used to apply insertion force upon the liner; for example, a mating flange may be placed on the outer face of the liner flange, and tightened by through-bolts to push the liner flange into position against the pipe flange.

The rollers for the reduction of the diameter of the liner may conveniently be mounted in pairs, as are rollers 10 and 11 shown in Figure 1. Advantageously, each roller set may comprise three or four or more rollers, four being an especially preferred number; the use of numerous rollers in a roller set, while more costly than a pair of rollers, has the advantage that less friction is created by slippage between the rolling surfaces of the rollers and the pipe liner passing through them due to the difference in relative surface speeds of the rollers between the centre portions 12 and 13 and the rim portions 14, 14a and 15, 15a, in Figure 2.

At least one of the roller sets must be driven by rotational drive means known in the art, for example geared drives. All rollers in a set are driven. The speed of the roller drives is adjusted to maintain a desired level of tension on the liner as it is drawn into the pipe section. By driving the rollers at the controlled rate herein described, the rate of drawing the liner into the pipe section is substantially raised beyond that available by prior art methods without increasing the tension on the liner.

Without committing to a specific technical explanation of the invention, it is thought that the amount of work done on the liner per unit time in order to reduce its diameter is proportional to the speed at which the reduction takes place, other things being equal. Since in prior art methods involving reduction of the liner by a die the work is entirely supplied by a pulling force on the liner, the tension necessary to sustain a given diameter decrease in a liner of a given wall thickness and diameter is also proportional to the rate of insertion of the liner into the pipe. Further, the frictional force resisting the movement of the liner into the pipe is proportional to the length of the liner drawn into the pipe. Thus at high rates of insertion of long liner sections, the tension on the liner may readily increase beyond the tensile yield limit of the liner and cause permanent damage to the liner if prior art methods were used. In the process of the invention, the work necessary to reduce the liner diameter is supplied largely by the roller sets, and the pulling tension is thereby limited to the amount necessary to overcome the frictional resistance to pulling the liner through the pipe section.

Figure 4 illustrates an embodiment of the invention utilising a set of four rollers to reduce the diameter of the pipe liner. Rollers 50, 51, 52, 53 are mounted each having its axis at a right angle to the axis of the adjacent roller such that depressed centre portions 54, 55, 56, 57 together form a circular passage 59 which reduces the diameter of liner 3 as it is pulled through passage 59. The roller axles are mounted rotatably in frame 58. Bevel gearsets 60, 61, 62 drive rollers 50, 51, 52, 53 such that the four circumferences of the rollers move at equal speed in the same direction at passage 59. One of the gearsets is driven by bevel gear 63 which in turn is driven by variable-speed drive 64. It is essential that all rollers in a set be driven.

Example 1

An eight-inch nominal diameter steel pipeline section having an inside diameter of 196.8 mm (7.749 inches) was lined with a pipe liner manufactured from SCLAIR™35B polyethylene resin and having a wall thickness of 6.40 mm (0.252 inches), and an outside diameter of 201.7 mm (7.940 inches), which was 2.5 percent larger than the inside diameter of the pipeline section. Thus the cross-sectional area of the liner before being radially compressed by the rollers was 39.27 cm$^2$ (6.09 in$^2$). The inside surface of the pipe was oxidized and rusty, but not so severely corroded as to affect the pressure capability of the pipe. When the relining procedure was carried out, the ambient temperature was about 20°C and the temperature of the buried steel pipe was about 10°C.

Three pairs of rollers were arranged at the entrance to the pipeline section, having a circumferential cross-section such that the liner, after passing through the rollers, exhibited an outside diameter of 177.8 mm (7.000 inches) while under tension; thus the rollers caused the diameter of the liner to decrease by 11.8 percent. A wireline passing through the pipeline section was attached to the leading end of the pipe liner and the liner was pulled through the pipeline section at an average rate of about 25 m/min; the tension on the wireline was maintained and measured throughout the pulling procedure. All rollers were driven by a hydraulic motor and gearset at a rate such that the tension on the liner was limited to no more than 24 500 N (5500 lbf), corresponding to a tensile stress on the polyethylene of the liner of 6.29 MPa (912 psi). Had the insertion rate of 25 m/min been maintained using only tension on the liner to draw the liner through the rollers and into the pipe, the liner would have been subjected to a stress beyond the tensile yield limit of the polyethylene.

The pipeline section was 430 m long. Individual sections of pipe liner had been butt welded using a conventional fusion joining machine and removing the external bead of polyethylene created by the joining machine, to produce an essentially unitary liner of the required length.

The rollers were lubricated with a small amount of Yellow 77 lubricant. At the end of the pulling procedure, when the liner had been fully inserted, liner having an original length of about 436 m had been used. Approximately 55 m of liner protruded from the pulling end of the lined pipe section; at the insertion end, the liner was not cut from the source of pipe liner material. The tension on the wireline was gradually released, and within 10 seconds, 15 m of the liner had receded into the pipeline section; the liner continued to recede more and more slowly and its motion had completely stopped 8 hours later by which time 25 m of liner had receded into the pipeline section at the pulling end and 1 m had receded at the insertion end.

Stub-end flanges were attached at both ends of the liner by conventional methods to allow pressure testing and subsequent coupling of the pipeline section. During the pressure test, there was substantially no issuance of air or water from the bleed holes drilled near each end of the pipeline section; thus it was clear that the liner had expanded by reversion into virtually complete contact with the inner wall of the pipeline section prior to the application of any internal pressure.

Example 2

A four-inch nominal diameter steel pipeline section about 600 m long having an inside diameter of 102.3 mm (4.026 inches), was lined with a pipe liner manufactured from SCLAIR™35B polyethylene resin having a wall thickness of 5.34 mm (0.210 inches), and an outside diameter of 105.9 mm (4.170 inches), which was 3.6 percent larger than the inside diameter of the pipeline section. The condition of the pipe and the ambient conditions were similar to those of Example 1. Two pairs of rollers were arranged at the entrance to the pipeline section, similarly to the rollers of Example 1, having a circumferential cross-section such that the liner, after passing through the rollers, exhibited an outside diameter of 90.93 mm (3.580 inches) while under tension, thus reducing its diameter by 14.2 percent. The liner was pulled through the pipeline section by a wireline at an average rate of about 30 m/min; the tension on the wireline was maintained and measured throughout the pulling procedure. All rollers were driven by a hydraulic motor and gearset at a rate such that the tension on the liner was limited to no more than 20 000 N (4500 lbf), corresponding to a tensile stress on the polyethylene of the liner of 11.9 MPa (1724 psi). Had the insertion rate of 30 m/min been maintained using only tension on the liner to draw the liner through the rollers and into the pipe, the liner would have been subjected towards the end of the pull to a tension of about 26 700 N, corresponding to a stress in the liner of about 15.9 MPa, beyond the tensile yield limit of the polyethylene. Other conditions of the test were similar to the conditions in Example 1. Stub-end flanges were attached by conventional methods, and the lined pipe was successfully pressure tested and coupled into the pipeline system.

The method of the invention exhibits a number of useful benefits not available from prior art methods. An important advantage is that the entire lining operation may be undertaken at ambient temperature; it is not necessary to supply large quantities of heated fluid, e.g. water, in order to cause reversion of the liner into tight contact with the pipeline section and therefore the method of the invention enjoys a considerable cost advantage over other methods. In contrast to prior art roll-reducing and die-reducing methods, a long section of liner may be drawn into a pipeline at a rapid rate without causing the tensile stress on the liner to rise into the range in which it will permanently deform the liner or cause it to fail at the wireline attachment device. A further advantage of the method of the invention is that the major portion of the expansion of the liner occurs amost immediately after the diameter-reducing stress is removed, e.g. after the tension is removed from the wireline; thus a lining crew may quickly prepare many kilometres of lined in-situ pipeline sections. A still further advantage is that the method of the invention permits a liner of about 800 m in length to be inserted in a single pull, and if conditions are favourable, that is if the inside surface of the pipe is reasonably clean and has few sharp bends, as much as one kilometre under favourable conditions; therefore it permits digging relatively few holes at which the buried pipeline must be exposed and broken. Additionally, compared to lining methods in which the liner is merely stretched to decrease its diameter, the method of the invention requires about one-quarter the amount of liner stretching because of the manner in which the thermoplastic polymer behaves in accordance with Poisson's ratio.

**Claims**

1. A method of installing a pipe liner of synthetic polymer in a pipe section comprising:

(a) providing a pipe liner of synthetic polymer having an outer diameter larger than the inside diameter of the pipe section,

(b) passing the liner through a diameter-reducing means adjusted so that the resultant outside diameter of the liner while in a reduced diameter state is sufficiently smaller than the inside diameter of the pipe section that the liner readily passes through the pipe section,

(c) positioning the pipe liner in the pipe section while maintaining the liner in the reduced-diameter state by the application of a stress, and

(d) releasing said stress in the liner,

said diameter reducing being less than the upper limit of the elastic-plastic range, said elastic-plastic range being the range above the elastic range where the polymer would, if unrestrained, expand to about its original diameter and below the plastic range where the polymer would, if restrained, increasingly exhibit permanent deformation, characterized in that

(i) the said pipe liner has a normal outer diameter from about 0.5 percent to 6 percent larger than the inside diameter of the pipe section,

(ii) the diameter reducing means is at least one set of at least two rollers,

(iii) the liner is maintained in the reduced-diameter state by longitudinal or radial stress, and

(iv) at least one set of said rollers is driven at a rate sufficient to maintain tensile stress in said liner during the insertion step at a value below the tensile yield limit of said synthetic polymer.

2. The method of Claim 1 in which the liner is drawn into the pipe section, and the pipe liner is positioned in the pipe section, while maintaining tensile stress on the liner, at least one set of said rollers being driven at a rate sufficient to maintain said tensile stress in said liner during the insertion step at a value at least sufficient to maintain the liner in the reduced-diameter state and below the tensile yield limit of said synthetic polymer.

3. The method of Claim 1 or Claim 2 in which said pipe liner has an outer diameter from 1.0 percent to 3.0 percent larger than the inside diameter of the pipe section.

4. The method of any one of Claims 1—3 in which said pipe liner is passed through a plurality of sets of diameter-reducing rollers.

5. The method of any one of Claims 1—4 in which said set of diameter-reducing rollers comprises at least three rollers.

6. The method of any one of Claims 1—4 in which said roller sets comprise two individual rollers having a peripheral concave rolling surface substantially semi-circular in cross-section.

7. The method of any one of Claims 1—5 in which said roller sets each comprise four rollers.

8. The method of Claim 7 in which said diameter-reducing rollers comprise at lesat two roller sets.

9. The method of Claim 7 in which said diameter-reducing rollers comprise three roller sets.

10. The method of any one of Claims 1—9 in which said pipe liner is circular in cross-section.

11. The method of any one of Claims 1—10 in which the temperature at which said lining of pipe is carried out is from about −10°C to +30°C.

12. The method of any one of Claims 1—11 in which the longitudinal tensile stress is sufficient to maintain the liner in the reduced-diameter state.

13. The method of any one of Claims 1—12 in which the pipe section is from about 50 mm to 200 mm in diameter.

14. The method of any one of Claims 1—13 in which, during the diameter-reducing step, the diameter of the pipe liner is reduced by no more than 20 percent.

15. The method of any one of Claims 1—14 in which said rollers are driven at a rate sufficient to insert said liner at a rate of at least 8 m/min.

16. The method of any one of Claims 1—15 in which said liner is maintained in the reduced-diameter state by the application of radial compressive stress maintained by fluid pressure external to said pipe liner.

17. The method of any one of Claims 1—16 in which the time during which the pipe liner is allowed to remain in the reduced-diameter state is no more than about 2 hours.

18. The method of any one of Claims 1—17 in which said rollers are driven by a variable-speed drive.

19. The method of Claim 18 in which said variable speed drive is by hydraulic motor.

20. The method of any one of Claims 1—19 in which the polymer of said synthetic pipe liner is polyethylene.

21. The method of Claim 20 in which said polymer is high-density polyethylene.

22. The method of any one of Claims 1—19 in which the polymer of said synthetic pipe liner is polyamide.

23. Apparatus for lining a pipeline section with a tubular liner of synthetic polymer, comprising:

(a) means for drawing said liner into said pipeline at a variable controlled rate,

(b) at least one set of at least two rollers adapted for reducing the diameter of said liner by an amount from about 5 to 20 percent, said rollers being adapted to be mounted in registration with an end of said pipeline section,

(c) means for controlling peripheral speed of said rollers such that the tensile stress on the liner is maintained at a value not exceeding the tensile yield limit of said synthetic polymer.

24. The apparatus of Claim 23 in which said means for controlling peripheral speed of said rollers is driven by a hydraulic motor.

**Patentansprüche**

1. Verfahren zum Einführen eines Futterrohres aus synthetischem Polymer in einen Rohrabschnitt umfassend:

(a) Bereitstellung eines Futterrohres aus synthetischem Polymer, dessen Außendurchmesser größer ist als die lichte Weite des Rohrabschnittes,

(b) Führen des Futterrohres durch eine seinen Durchmesser reduzierende bzw. einziehende Vorrichtung, die so eingestellt ist, daß der resultierende Außendurchmesser des Futterrohres, während es sich in einem Zustand des reduzierten bzw. eingezogenen Durchmessers befindet, ausreichend geringer ist als die lichte Weite des Rohrabschnittes, sodaß das Futterrohr ohne Schwierigkeiten durch den Rohrabschnitt geführt werden kann,

(c) Positionieren des Futterrohres im Rohrabschnitt, während des Futterrohr im Zustand des reduzierten bzw. eingezogenen Durchmessers durch Anwendung einer mechanischen Spannung bzw. Beanspruchung gehalten wird, und

(d) Aufheben der genannten Spannung bzw. Beanspruchung im Futterrohr,

wobei die Reduzierung bzw. Einziehung des Durchmessers geringer ist als die obere Grenze des elastoplastischen Bereiches und der genannte elastoplastische Bereich der Bereich oberhalb des elastischen Bereiches, in dem das Polymer, wenn es nicht zurückgehalten bzw. eingespannt wäre, sich bis zu etwa seinem ursprünglichen Durchmesser ausdehnen würde, und unterhalb des plastischen Bereiches ist, in dem das Polymer, wenn es zurückgehalten bzw. eingspannt wäre, in zunehmendem Maße eine permanente Verformung aufweisen würde, dadurch gekennzeichnet, daß

(i) das genannten Futterrohr einen Außendurchmesser aufweist, der um etwa 0,5—6% größer ist als die lichte Weite des Rohrabschnittes,

(ii) die den Durchmesser reduzierende bzw. einziehende Vorrichtung wenigstens ein Satz von wenigstens zwei Walzen ist,

(iii) das Futterrohr im Zustand des reduzierten bzw. eingezogenen Durchmessers durch Anwendung einer Längs- oder Radial-Spannung bzw. -Beanspruchung gehalten wird und

(iv) wenigstens ein Satz der genannten Walzen mit einer Rate angetrieben wird, die ausreicht, um die Zugspannung bzw. -beanspruchung im genannten Futterrohr während des Einführungsschrittes auf einem Wert unter der Streckgrenze des genannten synthetischen Polymers zu halten.

2. Verfahren nach Anspruch 1, in dem das Futterrohr in den Rohrabschnitt hineingezogen wird und das Futterrohr im Rohrabschnitt positioniert wird, während das Futterrohr unter Zugspannung bzw. -beanspruchung gehalten wird, wobei wenigstens ein Satz der genannten Walzen mit einer Rate angetrieben wird, die ausreicht, um die genannte Zugspannung bzw. -beanspruchung in dem genannten Futterrohr während des Einführungsschrittes auf einem Wert zu halten, der wenigstens ausreicht, um das Futterrohr in dem Zustand des reduzierten bzw. eingezogenen Durchmesser zu halten und der unter der Streckgrenze des genannten synthetischen Polymers liegt.

3. Verfahren nach Anspruch 1 oder 2, in dem das genannte Futterrohr einen Außendurchmesser aufweist, der um 1,0—3,0% größer ist als die lichte Weite des Rohrabschnittes.

4. Verfahren nach einem der Ansprüche 1—3, in dem das genannte Futterrohr durch eine Vielzahl von Sätzen von den Durchmesser reduzierenden bzw. einziehenden Walzen geführt wird.

5. Verfahren nach einem der Ansprüche 1 bis 4, in dem der genannte Satz von den Durchmesser reduzierenden bzw. einziehenden Walzen wenigstens drei Walzen umfaßt.

6. Verfahren nach einem der Ansprüche 1 bis 4, in dem die genannten Walzensätze zwei einzelne Walzen umfassen, die eine konkave Umfangswalzfläche von im wesentlichen halbkreisförmigem Querschnitt aufweisen.

7. Verfahren nach einem der Ansprüche 1—5, in dem die genannten Walzensätze jeweils vier Walzen umfassen.

8. Verfahren nach Anspruch 7, in dem die genannten den Durchmesser reduzierenden bzw. einziehenden Walzen wenigstens zwei Walzensätze umfassen.

9. Verfahren nach Anspruch 7, in dem die genannten den Durchmesser reduzierenden bzw. einziehenden Walzen drei Walzensätze umfassen.

10. Verfahren nach einem der Ansprüche 1—9, in dem das genannte Futterrohr einen kreisförmigen Querschnitt aufweist.

11. Verfahren nach einem der Ansprüche 1—10, in dem die Temperatur, bei der die genannte Auskleidung des Rohres durchgeführt wird, etwa −10°C bis +30°C beträgt.

12. Verfahren nach einem der Ansprüche 1—11, in dem die in Längsrichtung wirkende Zugspannung bzw. -beanspruchung ausreicht, um das Futterrohr im Zustand des reduzierten bzw. eingezogenen Durchmessers zu halten.

13. Verfahren nach einem der Ansprüche 1—12, in dem der Rohrabschnitt einen Durchmesser von etwa 50 mm bis 200 mm aufweist.

14. Verfahren nach einem der Ansprüche 1—13, in dem während des den Durchmesser reduzierenden bzw. einziehenden Schrittes der Durchmesser des Futterrohres um nicht mehr als 20% reduziert bzw. eingezogen wird.

15. Verfahren nach einem der Ansprüche 1—14, in dem die genannten Walzen mit einer Rate angetrieben werden, die ausreicht, um das genannten Futterrohr mit einer Rate von wenigstens 8 m/min einzuführen.

16. Verfahren nach einem der Ansprüche 1—15, in dem das genannte Futterrohr im Zustand des reduzierten bzw. eingezogenen Durchmessers durch Anwendung von radialer Druckspannung bzw. -beanspruchung gehalten wird, die durch Fluiddruck außerhalb des genannten Futterrohres aufrechterhalten wird.

17. Verfahren nach einem der Ansprüche 1—16, in dem die Zeit, während der das Futterrohr im Zustand des reduzierten bzw. eingezogenen Durchmessers belassen wird, nicht mehr als 2 Stunden beträgt.

18. Verfahren nach einem der Ansprüche 1—17, in dem die genannten Walzen mittels eines Regelantriebes angetrieben werden.

19. Verfahren nach Anspruch 18, in dem der genannte Regelantrieb mittels Hydraulikmotor erfolgt.

20. Verfahren nach einem der Ansprüche 1—19, in dem das Polymer des genannten synthetischen Futterrohres Polyäthylen ist.

21. Verfahren nach Anspruch 20, in dem das genannte Polymer hochdichtes Polyäthylen ist.

22. Verfahren nach einem der Ansprüche 1—19, in dem das Polymer des genannten synthetischen Futterrohres ein Polyamid ist.

23. Vorrichtung zum Auskleiden eines Rohrleitungsabschnittes mit einer röhrenförmigen Auskleidung aus synthetischem Polymer, umfassend:

(a) eine Einrichtung zum Ziehen der genannten Auskleidung in die genannte Rohrleitung mit einer variablen, gesteuerten Rate,

(b) wenigstens einen Satz von wenigstens zwei Walzen, die dazu ausgebildet sind, den Durchmesser der genannten Auskleidung um etwa 5—20% zu reduzieren bzw. einzuziehen, wobei die genannten Walzen dazu ausgebildet sind, mit einem Ende des genannten Rohrleitungsabschnittes ausgerichtet montiert zu werden,

(c) eine Einrichtung zur Steuerung der Umfangsgeschwindigkeit der genannten Walzen auf solche Weise, das die Zugspannung bzw. -beanspruchung am Futterrohr auf einem Wert gehalten wird, der die Streckgrenze des genannten synthetischen Polymers nicht überschreitet.

24. Vorrichtung nach Anspruch 23, in der die genannte Einrichtung zur Steuerung der Umfangsgeschwindigkeit der genannten Walzen von einem Hydraulikmotor angetrieben ist.

## Revendications

1. Procédé pour installer un revêtement de polymère synthétique dans une section de conduit comprenant:

a) fournir un revêtement de conduit de polymère synthétique ayant un diamètre externe plus grand que le diamètre interne de la section de conduit;

b) faire passer le revêtement à travers des moyens de réduction de diamètre réglés de sorte que le diamètre externe résultant du revêtement, quand il est dans un état de diamètre réduit, est suffisamment plus petit que le diamètre interne de la section de conduit pour que le revêtement traverse facilement la section de conduit;

c) placer le revêtement dans la section de conduit tout en maintenant le revêtement dans l'état de diamètre réduit par l'application d'un effort, et;

d) relâcher ledit effort dans le revêtement, ladite réduction de diamètre étant moindre que la limite supérieure du domaine élastique-plastique, ledit domaine élastique-plastique étant le domaine au-dessus du domaine élastique dans lequel le polymère, s'il n'était pas contraint, subirait une expansion à environ son diamètre d'origine et au-dessous du domaine plastique dans lequel le polymère, s'il était contraint, présenterait, de façon croissante, une déformation permanente, caractérisé en ce que:

i) ledit revêtement de conduit présente un diamètre externe normal plus grand d'environ 0,5% à 6% que le diamètre interne de la section de conduit;

ii) les moyens de réduction de diamètre sont constitués par au moins un jeu d'au moins deux galets;

iii) le revêtement est maintenu dans l'état de diamètre réduit par effort radial ou longitudinal; et

iv) au moins un jeu desdits galets est entraîné à une vitesse suffisante pour maintenir l'effort de traction dans ledit revêtement pendant l'étape d'insertion à une valeur au-dessous de la limite d'élasticité à la traction dudit polymère synthétique.

2. Procédé de la revendication 1, dans lequel le revêtement est tiré dans la section de conduit, et le revêtement est positionné dans la section de conduit, tout en maintenant l'effort de traction sur le revêtement, au moins un jeu desdits galets étant entraîné à une vitesse suffisante pour maintenir ledit effort de traction dans ledit revêtement pendant l'étape d'insertion à une valeur au moins suffisante pour maintenir le revêtement dans l'état de diamètre réduit et au-dessous de la limite d'élasticité à la traction dudit polymère synthétique.

3. Procédé de la revendication 1 ou de la revendication 2, dans lequel ledit revêtement de conduit présente un diamètre externe plus grand de 1,0% à 3,0% que le diamètre interne de la section de conduit.

4. Procédé selon l'une quelconque des revendications 1 à 3, dans lequel ledit revêtement de conduit traverse une pluralité de jeux de galets de réduction de diamètre.

5. Procédé selon l'une quelconque des revendications 1 à 4, dans lequel ledit jeu de galets de réduction de diamètre comprend au moins trois galets.

6. Procédé selon l'une quelconque des revendications 1 à 4, dans lequel lesdits jeux de galets comprennent deux galets individuels ayant une surface de roulage périphérique concave sensiblement semi-circulaire en section transversale.

7. Procédé selon l'une quelconque des revendications 1 à 5, dans lequel lesdits jeux de galets comprennent chacun quatre galets.

8. Procédé de la revendication 7, dans lequel lesdits galets de réduction de diamètre comprennent au moins deux jeux de galets.

9. Procédé de la revendication 7, dans lequel lesdits galets de réduction de diamètre comprennent trois jeux de galets.

10. Procédé selon l'une quelconque des revendications 1 à 9, dans lequel ledit revêtement de conduit est circulaire en section transversale.

11. Procédé selon l'une quelconque des revendications 1 à 10, dans lequel la température à laquelle le conduit est revêtu est comprise entre environ −10°C et +30°C.

12. Procédé selon l'une quelconque des revendications 1 à 11, dans lequel l'effort de traction longitudinal est suffisant pour maintenir le revêtement dans l'état de diamètre réduit.

13. Procédé selon l'une quelconque des revendications 1 à 12, dans lequel la section de conduit présente un diamètre d'environ 50 mm à 200 mm.

14. Procédé selon l'une quelconque des revendications 1 à 13, dans lequel, pendant l'étape de réduction de diamètre, le diamètre du revêtement de conduit est réduit de pas plus de 20%.

15. Procédé selon l'une quelconque des revendications 1 à 14, dans lequel lesdits galets sont entraînés à une vitesse suffisante pour insérer ledit revêtement à une vitesse d'au moins 8 m/mn.

16. Procédé selon l'une quelconque des revendications 1 à 15, dans lequel ledit revêtement est maintenu dans l'état de diamètre réduit par application d'un effort compressif radial maintenu par une pression de fluide externe audit revêtement de conduit.

17. Procédé selon l'une quelconque des revendications 1 à 16, dans lequel la durée pendant laquelle le revêtement de conduit reste dans l'état de diamètre réduit n'est pas supérieure à environ 2 heures.

18. Procédé selon l'une quelconque des revendications 1 à 17, dans lequel lesdits galets sont entraînés par un entraînement à vitesse variable.

19. Procédé de la revendication 18, dans lequel ledit entraînement à vitesse variable est effectué par un moteur hydraulique.

20. Procédé selon l'une quelconque des revendications 1 à 19, dans lequel le polymère dudit revêtement de conduit synthétique est du polyéthylène.

21. Procédé de la revendication 20, dans lequel ledit polymère est du polyéthylène à haute densité.

22. Procédé selon l'une quelconque des revendications 1 à 19, dans lequel le polymère dudit revêtement de conduit synthétique est du polyamide.

23. Appareil pour revêtir une section de conduit par un revêtement tubulaire de polymère synthétique, comprenant:

a) des moyens pour tirer ledit revêtement dans ledit conduit à une vitesse commandée variable,

b) au moins un jeu d'au moins deux galets adaptés pour réduire le diamètre dudit revêtement d'une valeur d'environ 5 à 20%, lesdits galets étant adaptés pour être montés en alignement avec une extrémité de ladite section de conduit,

c) des moyens pour commander la vitesse périphérique desdits galets de sorte que l'effort de traction sur le revêtement est maintenu à une valeur qui ne dépasse pas la limite d'élasticité à la traction dudit polymère synthétique.

24. Appareil de la revendication 23, dans lequel lesdits moyens pour commander la vitesse périphérique desdits galets sont entraînés par un moteur hydraulique.

EP 0 266 951 B1

FIG.1

FIG.2

1

FIG. 3

FIG. 4